Europäisches Patentamt

European Patent Office

Office européen des brevets

(11) Publication number: **0 086 344**
**B1**

(12) **EUROPEAN PATENT SPECIFICATION**

(45) Date of publication of patent specification: **12.04.89**

(21) Application number: **83100398.3**

(22) Date of filing: **18.01.83**

(51) Int. Cl.⁴: **B 23 P 9/02**

(54) Apparatus and method for prestressing a countersunk fastener hole.

(30) Priority: **10.02.82 US 347739**

(43) Date of publication of application:
**24.08.83 Bulletin 83/34**

(45) Publication of the grant of the patent:
**12.04.89 Bulletin 89/15**

(84) Designated Contracting States:
**AT BE CH DE FR GB IT LI LU NL SE**

(56) References cited:
**US-A-3 157 305**
**US-A-3 566 662**
**US-A-3 665 744**
**US-A-3 805 578**
**US-A-3 835 688**
**US-A-3 892 121**
**US-A-4 187 708**

(73) Proprietor: **Fatigue Technology, Inc.**
**150 Andover Park West P.O. Box C88388**
**Seattle, WA 98188 (US)**

(72) Inventor: **Champoux, Louis A.**
**2719 162nd S.E.**
**Bellevue, WA 98008 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

## Description

This invention relates to a method and apparatus for prestressing both countersink and straight portions of a countersunk fastener hole in a single operation as described in the preamble of claim 1 and 18.

Such a method and apparatus is known from US—A—3,835,688. This patent discloses using a seamless sleeve having a tapered end portion in which a tapered back-up member is received. The mandrel is pulled first through the straight part of the sleeve and through the back-up member. In this patent it is stated that the movement of the mandrel through the back-up member exerts sufficient force on the tapered end portion of the sleeve to result in a coldworking of the countersunk portion of the hole. The sleeve is left in the hole.

The disadvantage of this known apparatus and method is that it appears not possible to successfully coldwork the countersunk portion of the hole.

It is the object of the invention to provide an apparatus and a method to obviate the above disadvantage. This object is achieved by the features as described in the characterizing part of claim 1 and claim 18.

According to the apparatus and method according to the invention a split sleeve is used that is not left in the hole. Further the expandable member makes direct contact with the countersunk portion of the hole without the intermediate of the sleeve.

Another patent relating to prestressing or cold expansion of fastener holes, by use of a lubricated spacer sleeve, is US—A—3,566,662. A method and apparatus for making the sleeves is disclosed by US—A—3,665,744. US—A—3,892,121 discloses a form of mandrel and mandrel pulling tool or gun. US—A—4,187,708 discloses a preferred form of pull gun.

The present invention provides an apparatus and method by which a previously drilled countersunk hole is prestressed in the region of the hole and the region of the countersink in a single one-sided operation.

The present invention requires only two process steps — the first being the drilling of the hole and the countersink in a single operation. The second is the prestressing or cold expansion of the hole and the countersink in a single one-sided operation. This method, and apparatus provided therefor, improve the fatigue properties in the region of the countersink and the hole and eliminate the separate machining of the countersink required by the prior art.

The region of compressive residual stresses, according to the invention, extends radially outwardly from the outer edge of the countersink for a distance equal to the radial thickness of the prestress region of the hole. This is in contrast to the prior art wherein the extent of prestressing of the countersink is limited to the actual prestress of the straight hole.

It is another object of the invention to reduce the costs of the fastener hole drilling, countersinking, and prestressing in contrast to the prior art systems. The present invention eliminates the separate countersinking operations. The costs are also less than the prior interference fit fastener systems, because of reduced tolerances in the drill/countersinking operation, reduced inspection requirements, and because of the low interference, 0.00127 cm (0.0005 inch), with a fastener that does not require the driving operation employed with most high interference 0.01 cm (0.004 inch), fasteners.

It is a still further object of the invention to provide a prestressing system which reduces the susceptibility to stress corrosion by increasing the area of compressive residual stress around the edge of the countersink.

It is another object of the invention to provide prestressed countersink holes in which rework operations are less costly because the requirements to ream and re-countersink the hole are eliminated. In addition the low interference of the installed fastener facilitates easier removal when necessary, and thereby minimizes hole damage.

It is still another object of the invention to provide an improved method and apparatus for prestressing countersunk holes in which the length of the maximum diameter part of the mandrel and the coefficient of friction of the lubricant used within the sleeve are controlled as a way of controlling the reaction force which maintains the jaws loaded against the surface of the countersink.

It is a further object of the present invention to provide an apparatus and method for prestressing countersunk fastener holes in a workpiece wherein the holes have been drilled through a drill bushing in a drill fixture temporarily secured in front of the workpiece. Multiple drill bushings in the fixture are used to guide the drill so as to position all of the holes in the correct locations. The present invention permits the prestressing through the individual drill bushings and permits the reaming after prestressing through the same drill bushings without removing the fixture until all of the operations on the holes have been completed. The completion of the operations with the fixture in place is particularly desirable where close tolerances are required. Without the present invention, it would be necessary to drill and ream the holes with the drill fixture in position. The fixture would then be removed for the prestressing operation, and then it would be replaced for the final reaming operation.

It is another object of the present invention to eliminate the requirement for removing the fixture for prestressing by the provision of a relatively small diameter, gun nose piece in the form of a countersink prestressing device at the prestressing end of the pull gun. The prestressing device is adapted to be positioned through drill bushings, where available, and in the countersink of the fastener hole being prestressed. An elongated, lubricated prestressing sleeve retainer is an important part of the invention and it is adapted to be positioned within the countersink prestressing device axially externally of the pull gun. The countersink prestressing device and the sleeve retainer both have inner ends secured within the pull gun.

By having a small diameter countersink prestressing device extending outwardly from the pulling gun, the present invention provides the additional advantage of being adapted for prestressing countersunk holes on workpieces that have protuberances that would prevent the use of a relatively large diameter prior art pulling gun and nose piece because they could not be positioned adjacent the workpiece because of the protuberances. Thus, the relatively small diameter countersink prestressing device, which is insertable through drill bushings in the drill fixture, is also usable for engaging the workpiece where only a small space thereon is available for inserting the countersink prestressing device into the countersunk holes.

Further advantages of the invention may be brought out in the following part of the specification wherein small details have been described for the competence of disclosure, without intending to limit the scope of the invention which is set forth in the appended claims.

Referring to the accompanying drawings, which are for illustrative purposes:

Fig. 1 is a longitudinal sectional view of a section of a workpiece, showing a countersunk fastener hole which has been prestressed with a prior art technique;

Fig. 2 is the same type of view as Fig. 1, but showing the region of compressive residual stress which results from prestressing in accordance with the present invention;

Fig. 3 is a fragmentary isometric view of the nose of a pull gun and a mandrel embodying features of the present invention;

Fig. 4 is an exploded isometric view of the nose portion of the pull gun, the mandrel, and the prestressing sleeve;

Fig. 5 is the first of a series of four similar longitudinal sectional views illustrating the sequence of the prestressing operation according to the invention, the first view showing the nose portion of a pull gun, a portion of a workpiece immediately surrounding the hole and countersink to be prestressed, a prestressing sleeve in section, and the mandrel in side elevation, said first view showing the position of the prestressing tools immediately following the insertion of the mandrel and sleeve into the fastener hole;

Fig. 6 is a view similar to Fig. 5, illustrating the retraction of the mandrel by the pull gun, the increasing diameter portion and maximum diameter portion of the mandrel having commenced prestressing a portion of the workpiece, and the jaws of an expandable ring being forced into the countersunk portion;

Fig. 7 is a view similar to Figs. 5 and 6, illustrating the mandrel in the process of exerting a generally radially outwardly directed force on the jaws of the expandable ring to prestress the countersink;

Fig. 8 is a view similar to Figs. 5—7 illustrating the mandrel in a fully retracted position at the completion of the prestressing of the countersink;

Fig. 9 is a longitudinal sectional view of the countersunk fastener hole, showing a ridge formed in the cylindrical portion by a split sleeve and similar ridges formed by the countersink prestressing ring jaws;

Fig. 10 is an end view looking axially towards the fastener hole from the countersunk side, taken generally from the aspect of line 10—10 in Fig. 9;

Fig. 11 is an isometric exploded view of the parts of a second embodiment of the invention;

Fig. 12 is a pictorial view of the second embodiment, showing a countersink prestressing device having its conical end inserted into the countersink of a hole to be prestressed, there being an unshown mandrel extending through the fastener hole, the mandrel being in position for retraction into the prestressing device and the supporting pull gun;

Fig. 13 is an isometric partially exploded view, illustrating the position of a split, internally lubricated sleeve adapted to be slipped onto a mandrel, where it is to be positioned on the small diameter cylindrical portion thereof within the conical-ended countersink prestressing device extending outwardly of the pull gun;

Fig. 14 is a side elevational view of the countersink prestressing device, according to the invention, illustrating axially directed slots cut in the device before it is heat-treated;

Fig. 15 is an end view of the device taken from the left in Fig. 14;

Fig. 16 is a side elevational view of the device having its outer end clamped for heat-treating, in which the axially directed surfaces of the slots are drawn together so as to form narrow slits adjacent the outer end and so as to be in contact in at least part of the conical portion of the device;

Fig. 17 is a view illustrating the device in elevation after the heat-treating process has been completed;

Fig. 18 is an end elevational view taken from the left of Fig. 16;

Fig. 19 is a cross-sectional view of the outer end of a pull gun having a mandrel, and a countersink prestressing device and sleeve retainer, according to the invention, secured in the gun, the retainer having been moved outwardly by the inner end of the mandrel to open the countersink device to receive a split prestressing sleeve;

Fig. 20 is a view similar to Fig. 19, illustrating the sleeve retainer in a withdrawn position relative to the countersink device, and in which the sleeve is in a retention position on the retainer between the small diameter portion of the countersink device and the small diameter of the mandrel;

Fig. 21 is a view of the mandrel and sleeve in the workpiece in position to prestress the fastener hole, and the conical end of the prestressing device being in the countersink in position to prestress the same, and the retainer being in position to hold the sleeve during the prestressing operation;

Fig. 22 is a view similar to Fig. 21 in which the mandrel has been substantially retracted into the workpiece so that the increasing diameter portion and large diameter portion of the mandrel is functioning to prestress the fastener hole;

Fig. 23 is a view in which the prestressing has proceeded further, with the large diameter portion about to move against the sleeve just inwardly of the countersink prestressing portion, and illustrating the sleeve following the shape of the increasing diameter portion as it is held against the outer end of the retainer which is in a state of expansion as a result of the increasing diameter portion of the mandrel entering the same; and

Fig. 24 is a view illustrating the final stage of the prestressing of the hole and of the countersink, the maximum diameter portion of the mandrel passing through the countersink and expanding the retainer radially to a maximum extent while the sleeve is maintained in its retention position.

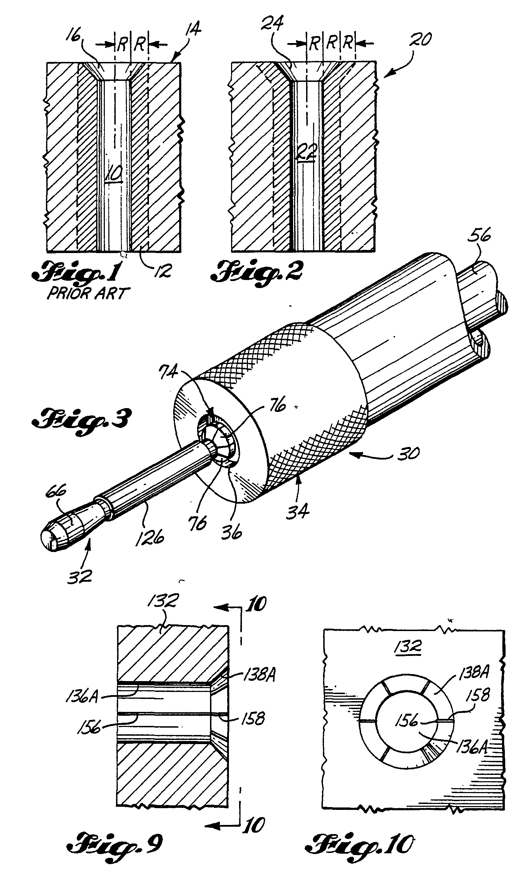

Referring again to the drawings, Fig. 1 is a view of a prestressed fastener hole 10 according to the prior art. The prestressing is indicated in the annular shaded area 12 in the workpiece 14. In the aircraft industry such a workpiece may typically be aluminum, titanium, or steel.

In the prior art, the prestressing occurred before the hole 10 was reamed, and countersunk at 16. The prestressing effect or compressive residual stresses around the hole extends radially the extent of one radius, for example, from the inner wall into the workpiece. Because countersinking occurred after prestressing, the amount of prestressing in the countersink region is reduced relative to that of the remainder of the hole. For example, at the outer edge of the countersink the prestressing extends substantially less than the length of the radius of the hole.

Fig. 2 shows a workpiece 20 in which a fastener hole 22 and a countersink 24 have been drilled in a single operation. Thereafter the area around the fastener hole and countersink was prestressed according to the invention so that the prestress radially outwardly the hole extends to the distance of one radius, for example, and similarly the prestressing of the countersink also extends a distance equal to one radius, for example.

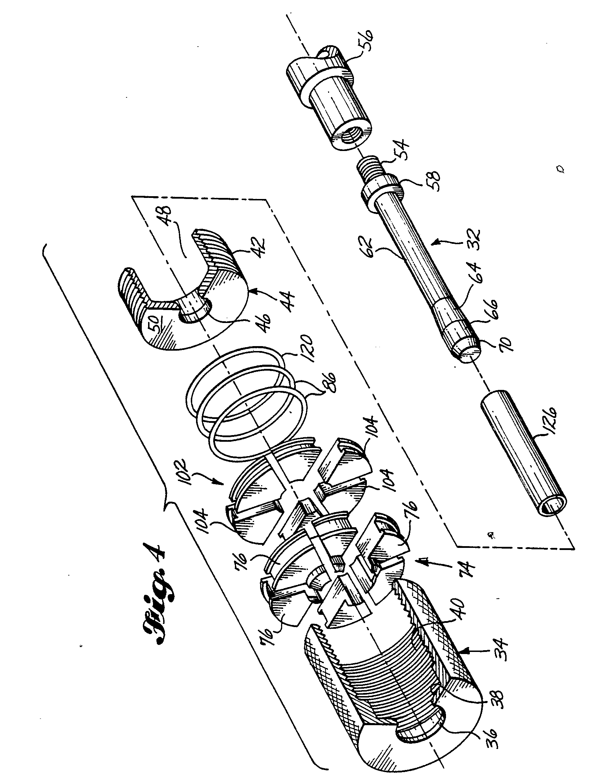

In Figs. 3 and 4 devices for prestressing a fastener hole and its countersink are shown in detail. A pull gun, generally designated as 30, is shown fragmentarily. Pull gun 30 may be of the type disclosed in US—A—4,187,708.

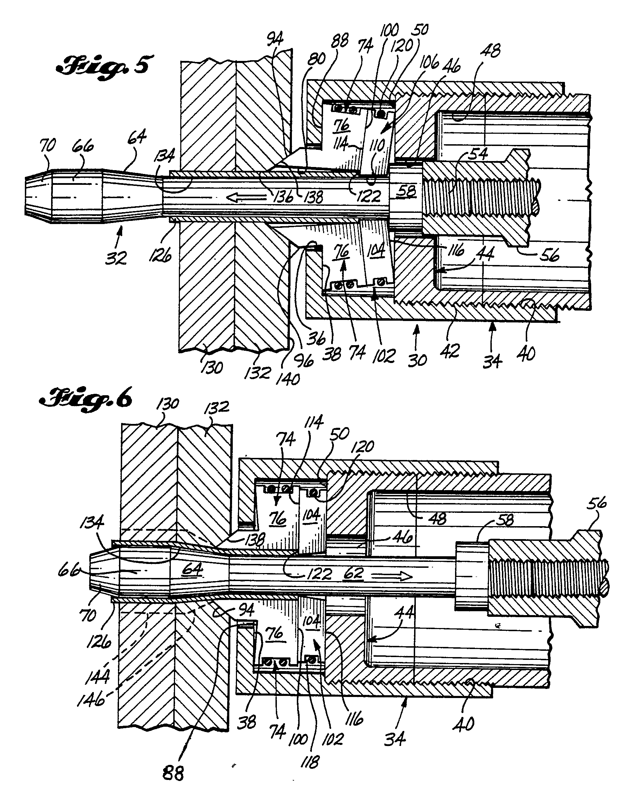

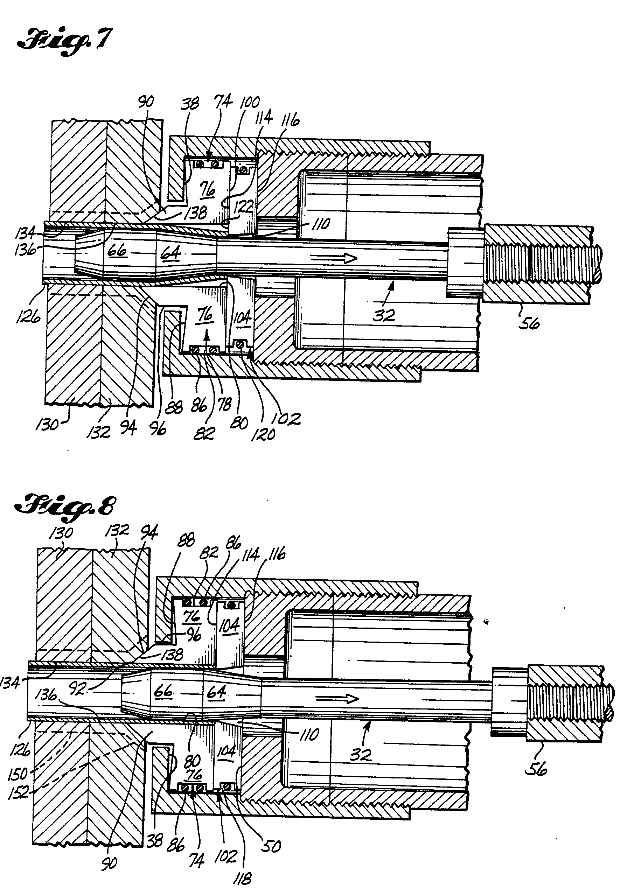

The pull gun 30 is operated hydraulically to move a mandrel 32 from an extended, Figs. 3 and 5, to a retracted position, Fig. 8. The hydraulic operating means is disclosed in detail in US—A—4,187,708.

A nose cap 34 is provided at the working end of the pull gun. Nose cap 34 comprises a cylindrical side wall and a radial end wall 35 formed to include a cylindrical center opening 36. The end portion of nose cap 34 opposite end wall 35, includes internal threads 40 adapted to be threadedly engaged with external threads 42 of a jaw retainer nut 44 having the same general configuration as the nose cap 34. Nut 44 includes an end wall center opening 46 through which the mandrel is reciprocated.

The mandrel 32 is threadedly engaged at its inner end 54 to an adapter 56 which is reciprocated by the hydraulic means, as described in the aforementioned US—A—4,187,708. A boss 58 on the mandrel 32 is in abutment with the adapter 56 when the mandrel 32 is tightly threadedly engaged therein.

Outwardly of the boss 58 is a small diameter or intermediate cylindrical portion 62 of the mandrel 32 and extending outwardly therefrom is an increasing diameter, truncated conical portion 64. The portion 64 terminates in a maximum diameter cylindrical portion 66, having a uniquely long axial length about equal to its diameter. The maximum diameter of the mandrel is slightly smaller than the diameter of the starting hole to be prestressed (e.g. smaller by an amount about equal to three times the sleeve wall thickness). The outer end of the mandrel is formed by a truncated conical decreasing diameter portion 70.

A generally cylindrical ring 74 is split along axial sections into six equal size segments 76 which when positioned together along their split surfaces have a generally cylindrical, axially directed passage 80 extending therethrough. The ring parts 76 have a circumferential annular groove 82 in which there are elastic rings 86 positioned to bias the segments 76 together. An outer annular surface 88 of the ring 74 slopes inwardly and terminates in an axially outwardly directed jaw forming portion 90 of each segment. The surface 88 is normally in partial contact with an annular shoulder 38 on the outer inside of the nose cap 34.

The inner surfaces of the ring sections 76 are segments of a cylindrical. Together they form the passage 80. The outer ends of the jaw portions 90 are in the nature of conical surfaces 94 with their largest diameter being axially inwardly and terminating in cylindrical surfaces 96 which in turn terminate in the annular surface 88. Inner annular surfaces 100 on the ring 74 are generally perpendicular to the surfaces forming the cylindrical passage 80.

A second generally cylindrical, split ring or disk 102 is formed of six segments 104, Figs. 4—8. Along the split surfaces the ring portions 104 are adapted to fit together to form a substantially cylindrical ring having an axially directed, generally conical passage 110 therethrough, the conical diverging inwardly so that the larger end of the passage 110 is at the inner end of the ring 102. The outer annular surfaces 114 of the ring 102 are normally in abutment with the inner annular surfaces 100 of the ring 74. Inner annular surfaces 116 are normally in contact with the annular surface 50 of the inner cap 44. The ring 102 has a circumferential annular groove 118 with an elastic ring 120 therein to bias the ring segments 104 and 106 together. The diameters of the passage 110 are smaller than the diameter of the cylindrical passage 80 so as to provide annular shoulders 122 on the inner circumferential surface of the annular surface 114.

The segments of the rings 74 and 102 are limited in axial movement to the extent provided by the acute angle formed radially inwardly by the surface 38 of the cap 34 and the surfaces 88 of the outer ring, Figs. 5—8.

When the mandrel 32 is extended, Figs. 3 and 4, a thin axially split, cold-expansion or prestressing steel sleeve 126 is slipped over the outer end of the mandrel onto the small diameter portion 62. Such a cold-expansion sleeve has a comparable or higher modulus and yield than the material of the workpiece. The interior surface 127 of the sleeve 126 has a solid film lubricant of a commercial type which includes lead oxide, graphite, and molybdenum disulfide. This lubricant film is capable of withstanding more than 2757904 kPa (400,000 psi). See the aforementioned US—A—3,566,662 and US—A—3,665,744 for detailed descriptions of the sleeves and a manner of constructing them. The preferred lubricant comprises molybdenum disulfide, graphite, a binder, a solvent (e.g. toluol) and possibly some lead oxide. As is known to those skilled in the art, the coefficient of friction of this lubricant can be varied by changing the various components.

In Figs. 5—8, the prestressing operation of the invention is illustrated. Two abutting workpieces 130 and 132, adapted to be secured together by a fastener, have holes 134 and 136, respectively, drilled therethrough. The hole 136 has a countersink 138 which typically is made in the same operation as the hole 136, the countersink having the same angle as the surfaces 94 of the jaws 90.

In Fig. 5, the mandrel 32 is in the fully extended position relative to the gun 30 and has been moved through the holes 134 and 136. The sleeve 126 is positioned on the small diameter portion 62 of mandrel 32. The outer end surface 35 of the nose cap 34 is spaced from the workpiece surface 140.

When the mandrel 32 is in the fully extended position, Fig. 5, the outer surface of the boss 58 is in contact with the surfaces 116 of the segments of the ring 102 so that the segments of both rings are tilted with respect to the gun and the workpiece. The surfaces 88 are in full contact with the shoulder 38 of the nose cap 34 and the conical surfaces 94 of the jaws are in partial contact with the countersink 138. The shoulder area 122 of the surfaces 114 of the ring 102 are in contact with the inner end of the sleeve and the cylindrical surface 80 of the ring 74 engage the inner end of the sleeve but are tilted away from the sleeve as they extend axially outwardly.

Because the prestressing process is a one-sided operation, the split sleeve 126 is installed on the mandrel 32 prior to inserting the mandrel 32 and sleeve 126 into the hole to be expanded and prestressed. A clearance between the sleeve and the wall of the hole is necessary and is equal to approximately 0.0076 cm (0.003 inch). As may be visualized from Fig. 8, to overcome this clearance, it is necessary for the beginning of the tapered section 64 of the mandrel to travel axially, after contact, approximately 0.165 cm (0.065 inch) before starting to expand the hole 134.

As shown in Fig. 6, the mandrel has been retracted substantially with respect to the work piece 130, and the increasing diameter portion 64 and the maximum diameter portion 66 have prestressed the area around the hole 134 as indicated by the broken lines 144 and 146, respectively. In the axial movement of the mandrel, the diameter of the sleeve 126 is stretched and the prestressed area is compressed as shown. In the axial movement prior to that indicated by Fig. 6, the surfaces 116 of the ring 102 had moved into abutment with the shoulder 50 on the inner cap. The surfaces 100 and 114 of the respective rings had moved into abutment so as to be at right angles to the axis of the mandrel. The cylindrical surfaces of the ring passage 80 had moved into contact with the sleeve and the conical surfaces 94 of the jaws 90 had moved so as to fully engage the countersink 138 but with no radial pressure. During the prestressing of the surfaces as indicated at 144 and 146 by the radial expansion of the sleeve, the shoulders 122 fully restrain the sleeve against any axial movement.

As shown in Fig. 7, the ring members remain axially in the same positions as in Fig. 6, and as the mandrel is retracted, the changing diameter portion 64 stretches the hole portions as it passes therethrough. In Fig. 7 mandrel 32 is in a position where the prestressing of the cylindrical hole portions has been completed. When the changing diameter portion 64 of the mandrel is moved so as to be in radial alignment with the jaws 90, the sleeve is further stretched so as to move the ring segments 76 of the ring 74 radially outwardly, Fig. 7, so that the conical surfaces 94 of the jaws 90 move into a high pressure prestressing contact with the countersink surface 138. The very substantial compressive force exerted thereagainst prestresses the countersink region, as shown in Figs. 7 and 8.

In Fig. 8, the maximum diameter portion 66 has moved out of the hole portions and has stretched the entire sleeve so that the inner end is in contact with the cylindrical surfaces 80 of the ring 74. In Fig. 8, the maximum diameter portion 66 continues to exert radial force on the ring so as to continue the stretching of the countersink until it moves almost totally out of the inner end of the sleeve. At this point the prestressing of the couuntersink has been completed to the extent shown in Fig. 2, where the prestressing on the countersink is the same distance from the surface thereof as is the distance of the prestressing from the wall surface of the hole, in contrast to the prior art prestressing shown in Fig. 1.

A considerable pulling force is required to pull the mandrel through the sleeve and cold-expand or prestress the hole and countersink. The maximum diameter cylindrical portion 66 of the mandrel increases the friction and pulling forces during the prestressing operation around the hole. For 0.47 — 1.27 cm (3/16" — 1/2") diameter holes in various aluminiums these forces are in the range of 8896.44 N to 40033.98 N (2,000 to 9,000 lbs). This same pulling force on the mandrel reacts against the jaws 90 and this reaction prevents the surfaces 94 from sliding out of the countersink during the prestressing operation.

The jaws 94 are held axially in the countersink by means of the positioning of the two rings 74 and 102 between the shoulders 38 and 50 and the arrangement of the sleeve on the shoulders 122, but this arrangement does not cause any great prestressing force against the countersink. According to an aspect of the invention, the coefficient of friction of the lubricant within the sleeve and the axial length of mandrel portion 66 are controlled in order to obtain an effective reaction force. Preferably, the length of mandrel portion 66 is substantially equal to the diameter at mandrel portion 66.

As stated, there is a minimum of 0.0076 cm (0.003 inch) clearance between the outside of the sleeve and the wall of the hole for the larger diameter portions of the mandrel to enter the hole and sleeve. The taper of the mandrel increasing diameter portion 64 is 0.1143 cm (0.045 inch/inch) and it has to travel 0.05588 cm (0.022 inch) for each 0.00254 cm (0.001 inch) of the aforesaid clearance or a minimum of 0.1676 cm (0.066 inch) travel. In the action depicted in Figs. 7 and 8, there is no clearance between the surfaces 94 and the countersink. Therefore, part of the countersink and part of the hole are expanded simultaneously so as to result in a required higher pulling force. This increases the prestressing through a coining effect.

Another feature that helps maintain the jaw surfaces 94 on the countersink, is that the outside of the sleeve is not lubricated. It first locks itself in the wall of the hole when the mandrel starts to expand the hole, and the friction between the outside of the sleeve and the jaws also provides a force to contain the segmented jaws in the countersink. As previously stated, the coefficient of friction of the lubricant within the sleeve is controlled as a further way of maintaining the jaw surfaces 94 on the countersink.

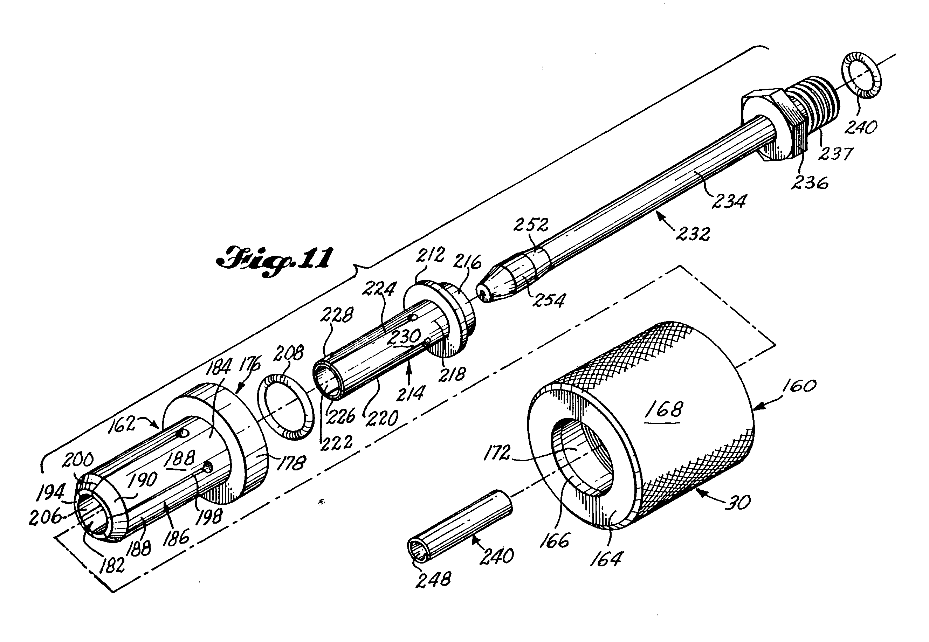

In Figs. 9 and 10, the workpiece 132 is shown after the hole and countersink have been prestressed. That is, when the sleeve and mandrel have been removed, the hole 136 has been expanded to be as 136A and the countersink has been expanded to be as 138A. As the split sleeve 126 is expanded in the hole, its diameter is stretched and the split is widened. The presence of the split results in formation of a small ridge 156. Similarly, the splits between the jaw surfaces 94 create very small marks 158 in the countersink. The marks in the countersink are of no significance to the rivets or bolts that fit into the fastener holes. In some installations it may be desirable to remove the ridge 156 by broaching or reaming, but it is now believed that resizing broaching is unnecessary.

A threaded inner end portion 237 of the mandrel 232 screws into an internally threaded blind bore received in an extendable-retractable portion 239 of the puller gun 30. An O-ring seal 240 is preferably provided between flange 236 and the outer end portion of member 239. When assembled, the flange 236 is sandwiched between the outer end portion of member 239 and the inner radial surface of a flange provided at the outer end of member 243. The member 168 threads onto both the outer portion of member 243 and the threaded outer end portion of the barrel 245 of the puller 30.

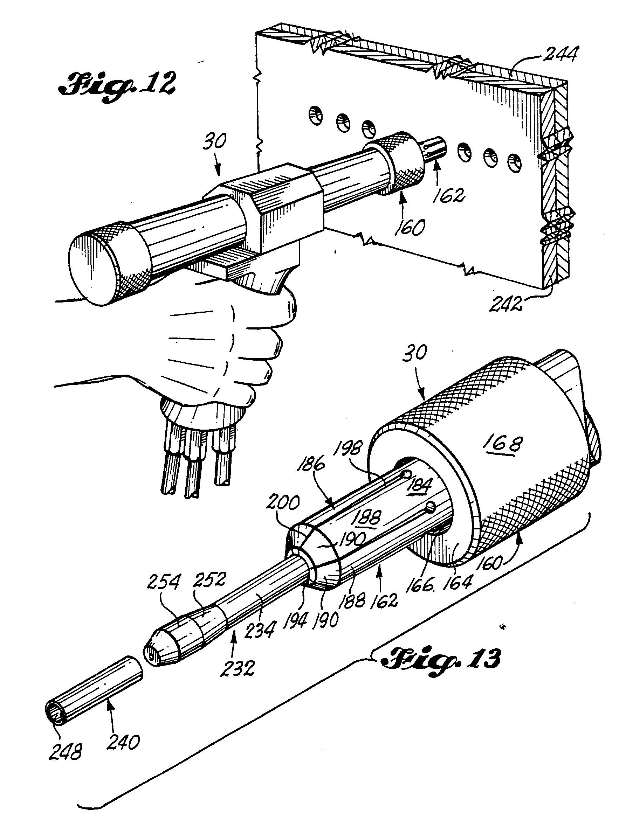

The embodiment of Figs. 11—24 will now be described.

A generally cylindrical nose cap 160 (Figs. 11—13 and 19) is provided adjacent the working and outer end of the pull gun and is adapted to secure a small diameter, elongated generally tubular countersink prestressing member or device 162 within the outer end of the gun 10. The cap 160 has an outer radial end wall 164 formed to include a cylindrical center opening 166. Axially inwardly of the wall 18 is an external cylindrical wall 168 having internal threads 170 (Fig. 19) terminating axially forwardly in a small diameter portion 172 forming an inwardly extension of the opening 166. Inwardly of and radially outwardly of the opening 166 is a flange 174 formed by the wall 164 and which is adapted to retain a radially extending cylindrical flange base 176 of the countersink prestressing device 162 (Figs. 11, 19 and 20). The flange 176 has an axially directed cylindrical wall 178 which at its inner end has counterbore 180 (Fig. 19). Extending outwardly of the counterbore and through the device 162 is a generally central tubular passage 182.

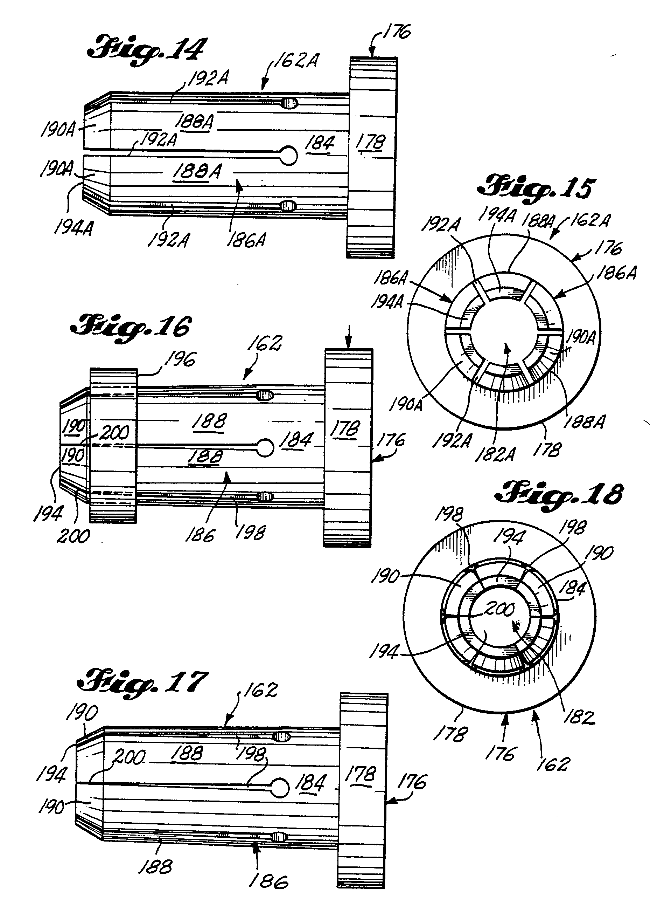

To aid in understanding the inventive structure 162, as used in its completed form, as shown in Figs. 11—13, 19 and 20, reference is made to Figs. 14—18. The countersink prestressing device is first formed as indicated by the structure shown as 162A in Figs. 14 and 15. The device 162A has the same flange configuration as the device 162 and extending outwardly from the flange 176 is a continuous cylindrical wall 184. Extending outwardly from the wall 184 internally is a passageway 182A which is formed of axially directed fingers generally designated as 186A, formed of generally cylindrical external surfaces 188A and external outer conical surfaces 190A. The fingers 186A are spaced by a multiple number of axially directed slots 192A, having generally parallel sides. The outer ends of the fingers 186A are formed of radial annular surfaces 194A.

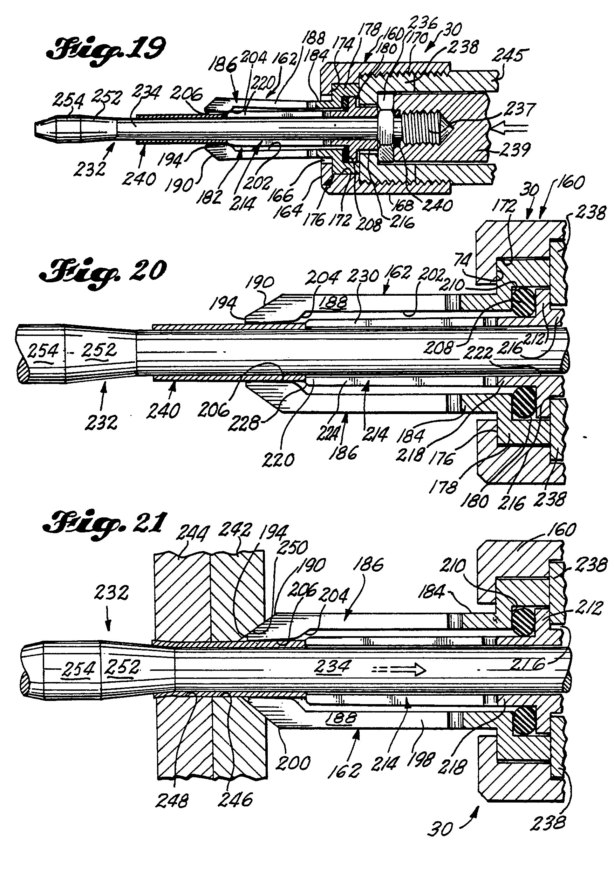

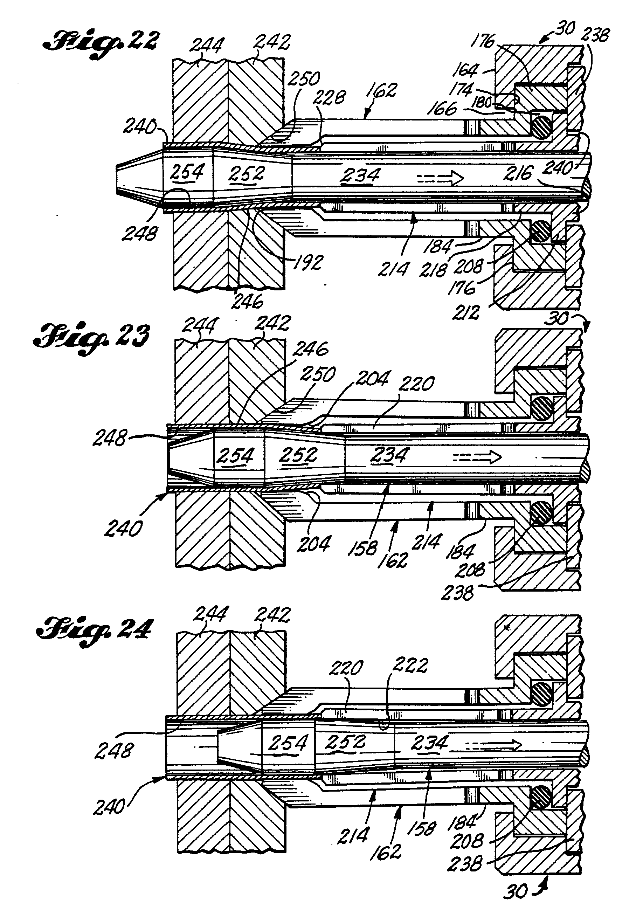

The structure 162A as shown in Figs. 14 and 15 is made from an ultra high strength alloy steel, or equivalent, prior to heat-treating. The heat-treating process and the resulting structure in the form of the device 162 is discussed with respect to Figs. 16—18 in which the internal surfaces of the device are not shown, except for the passageway 182 at the outer end which is slightly smaller in diameter than the passage 182A at the outer end (Fig. 15). The remainder of the interior is substantially the same after heat-treating as shown in Figs. 19 and 20, with respect to which it will be described.

As part of the heat-treating process the fingers 186A are clamped together (Fig. 16) with a ring 196 which narrows the slots 192A into axially directed slits 198 and 200. The surfaces of the slits 198 extend generally along the finger portions 188, and the surfaces 200 of the slits are substantially in contact inwardly of the radial surfaces 194, the contact extending substantially inwardly along the conical surfaces 190. The external surfaces of the fingers 186 also change from those of the fingers 186A in that the portions 188 are tapered outwardly from their inner ends to the conical surfaces 190. Thus, the outer surfaces of the finger portions 188 in cross section have decreasing diameters in the outwardly direction so that the device is generally conical outwardly of the uninterrupted cylindrical wall portion 184.

The device, as shown in Fig. 16, is heat-treated and quenched in a conventional manner and then the ring 196 is removed. After the removal of the ring, the device 162 retains the shape shown in Figs. 16—18. The heat-treating process substantially hardens the steel and stiffens the spring fingers 186 so that the conical prestressing surfaces 190 are able to exert great force on the countersink during the prestressing operation. The conical angle of the surfaces 190 is complementary to the angle of the countersink of the hole to be prestressed.

The internal configuration of the finished device 16 is best seen in Figs. 19 and 20. The passageway therethrough is bordered by the internal surfaces of the fingers 186, outwardly of the uninterrupted cylindrical wall 184. Internal surfaces 202 of the finger portions 188 tend to form smaller diameters axially outwardly. Axially outwardly of the surfaces 202 are conical shoulders 204 with the diameters decreasing axially outwardly. The shoulders 204 provide cam follower surfaces.

Outwardly of the surfaces 204 are finger surfaces 206 which are only slightly conical having their diameters decreasing outwardly.

At the inner end of the countersink prestressing device (Figs. 19 and 20) the counterbore 180 is adapted to receive an annular spring in the form of an elastomeric O-ring 208. The outer end of the O-ring 208 abuts a shoulder 210 of the bore. An annular flange 212 of a sleeve retainer generally designated as 214 (Fig. 1) supports the O-ring 208 inwardly within the gun 10. The sleeve retainer 214 is somewhat similar in configuration to the countersink device and is made of the same type of material, generally a heat-treated ultra high strength alloy steel. Inwardly of the flange 212 is a large diameter continuous circumferential cylindrical portion 216 and outwardly of the flange is a somewhat smaller diameter generally cylindrical continuous circumferential tubular portion 218, terminating in an outer slotted end tubular portion 220. The sleeve retainer 214 has a generally cylindrical passageway 222 therethrough, adapted to extend over the mandrel 232 and to be slidably engaged within the passageway of the countersink device 162.

The sleeve retainer 214 has four annularly spaced, axially directed slots 224 extending inwardly from its outer end surfaces 226 on which there are annular cam surfaces 228 extending so as to be generally parallel, in side view, Fig. 20, to the cam follower surfaces 204 on the countersink device. Spaced between the slots 224 are four stiff axially directed spring fingers 230. The reduced diameter portions withstanding more than 2757904 KPa (400,000 psi). See the aforementioned US—A—3,566,662 and US—A—3,665,744 for detailed descriptions of the sleeves and a manner of constructing them. The preferred lubricant comprises a molydenum disulfide, graphite, a binder, a solvent (e.g. tuluol) and possibly some lead oxide. As is known to those skilled in the art, the coefficient of friction of this lubricant can be varied by changing the various components. As stated, the lubricant allows the mandrel to expand the countersink, the force required to expand the countersink being higher than that required to expand the straight portion of the hole.

The inner small diameter slightly conical portions 206 of the fingers 186 of the countersink device are biased inwardly so as to tend to be in relatively tight contact with the mandrel portion 234 to prevent the insertion of the sleeve 240 on the mandrel 232 to the end of the retainer in its position of retention for the prestressing operation. As seen in Fig. 19, the mandrel 232 is moved outwardly so that the abutting member 236 makes contact with the inner surface of the inner cylindrical portion 216 of the retainer and continues outwardly until the abutting member makes contact with the inwardly directed flange on the retaining nut 238. In this movement the inner flange 212 is moved outwardly to compress the O-ring spring 208. Simultaneously, the cam edges 228 on the outer end of the retainer 214 make contact with the cam followers 204 axially inwardly of the small diameter portions 206 on each of the fingers 186 so as to move the outer ends of the fingers radially outwardly away from the cylindrical portion 234 of the mandrel 232. This permits the sleeve 240 to be moved inwardly into the retention position against the outer ends 226 of the fingers of the retainer 214. A slight retraction of the mandrel 232 so that its abutting member 236 is moved away from the inner end of the retainer portion 216 permits the O-ring 208 to be expanded so as to move the flange 212 inwardly into its normal position against the locking nut 238 (Fig. 20). After the cams 228 are removed from the cam followers 204, the generally conical surfaces 206 move into contact with the sleeve 240.

In Figs. 21—24, the prestressing operation of the invention is illustrated. Two abutting workpieces 242 and 244, adapted to be secured together by a fastener, have holes 246 and 248, respectively, drilled therethrough. Because the prestressing process is a one-sided operation, the split sleeve 240 is installed on the mandrel 232, as shown in Figs. 19 and 20, prior to inserting the mandrel 232 and sleeve 240 into the hole to be expanded and prestressed.

In Fig. 21 the mandrel had been inserted through the holes 246, 248 and the sleeve 240 had been moved in position in the holes 246, 248 by the movement of the retainer 214 toward the workpiece as the countersink conical surfaces 194 had been moved into countersink 250 of the hole 246.

In Fig. 21, the mandrel 232 has been started in the retraction direction, indicated by the arrow on the cylindrical portion 234, and the increasing diameter portion 252 has started prestressing of the material around the hole 248. As this occurs, the conical surfaces 190 of the countersink prestressing device become tightly engaged in the countersink surface 250 of the hole 246. At the same time the retainer 214 becomes tightly engaged with the end of the sleeve 240 to hold it in place during the prestressing operation. The internal diameter surfaces 206 at the end of the fingers 186 also tightly engage the sleeve 240 to keep it in contact with the retainer 214 and the mandrel surfaces as they pass therethrough.

It should be realized that when the mandrel 232 and sleeve 240 are inserted into the holes 246, 248 to be prestressed, a clearance between the sleeve 240 and the walls of the holes 246, 248 is necessary and is equal to approximately 0.00762 cm (0.003 inch). As may be visualized from Fig. 21, to overcome this clearance it is necessary for the beginning of the tapered section 252 of the mandrel 232 to travel axially, after contact, approximately 0.1651 cm (0.065 inch) before starting to expand the hole 248. For prestressing a hole having a countersink, it has been found tha the maximum diameter portion, as 254 of the mandrel 232, should extend axially for about the same length as its diameter.

As shown in Fig. 22, the mandrel 232 has been retracted substantially with respect to the workpiece 244 and the increasing diameter portion 252 and the maximum diameter portion 254 prestress the area around the hole 248, as indicated by the change in configuration or cold-expansion of the sleeve portion in the hole 248. That is, the metal around the hole 248 is in compression and as the increasing diameter portion 252 moves into the hole 246, expansion of the sleeve and hole 246 has commenced.

In Fig. 23 the cylindrical part of the hole 246 has been substantially prestressed by the entry of the large diameter portion 254, and the increasing diameter portion 252 is starting to act on the countersink prestressing device within the countersink 250.

As shown in Fig. 24, the prestressing of the hole 134 and of the countersink 250 has been substantially completed. As the completion occurs the generally cylindrical surfacese 188 on the ends of the fingers 186 remain in contact with the sleeve 240 and aid in holding the sleeve 240 on the end of the retainer 214 so that the sleeve 240 is held within the workpiece. The extent of the countersink prestressing is illustrated in Fig. 2.

A considerable pulling force is required to pull the mandrel 232 through the sleeve 240 and cold-expand or prestress the holes 246, 248 and countersink 250. The maximum diameter cylindrical portion 254 of the mandrel 232 greatly increases the friction and pulling forces around the hole during the prestressing operation. By way of example, for 0.47 — 1.27 cm (3/16" — 1/2") diameter holes in various aluminiums, these forces are in the range of 8896.44 N to 40033.98 N (2,000 to 9,000 pounds).

This same pulling force on the mandrel 232 reacts against the conical surfaces 190 of the fingers 186 and this reaction prevents the surfaces 190 from moving out of the countersink 250 during the prestressing operation. The fingers 186 are of great strength and are held axially in the countersink by the mandrel 232 exerting pressure on the conical surfaces 190 against the countersink 250.

In the action depicted in Figs. 23 and 24, there is no clearance between the surfaces 190 and the countersink 250. Therefore, part of the countersink 250 and part of the hole 246 are expanded simultaneously so as to result in a required higher pulling force. This increases the prestressing through a coining effect, the sleeve lubricant allowing the mandrel 232 to expand the countersink 250.

Another feature that helps maintain the conical surfaces 190 in the countersink 250 is that the outside of the sleeve 240 is not lubricated. It first locks itself in the walls of the holes 246, 248 when the mandrel 232 starts to expand the hole, and the friction between the outside of the sleeve 240 and the surfaces 206 also provides a force to contain the split finger ends having the conical surfaces 46 in the countersink 250.

From the foregoing, it is clear that the relatively small diameter of the countersink prestressing device 162 and the arrangement of small diameter retainer 214 substantially concentrically engaged therein, outwardly of the gun, provides great advantages in the prestressing of countersunk fastener holes. The small outside diameter of the prestressing device 162 is particularly adapted for use in prestressing through a drill bushing in a drill fixture. Such drill fixtures are typically positioned and temporarily fixed in front of the workpiece in which holes are to be drilled and then prestressed by cold expansion. In the drilling operation, the fixtures are used to guide drills through the drill bushings so as to position all of the holes in the correction location.

Because reaming is performed after the cold expansion of the holes, use of the small diameter prestressing device allows the manufacturer to leave the drill fixture in position after drilling, for the cold expansion portion of the operation, and thus enables the final reaming operation to be made through the drill bushing holes which remain in register with the original holes as drilled. It should be appreciated that the diameter of the prestressing device is only slightly greater than the diameter of the countersink being prestressed.

It should be noted that the outer end of the gun, Fig. 24, is positioned a substantial distance from the workpiece so that the gun would not interfere with protuberances on the workpiece and the small diameter of the device 162 would prevent contact with the protuberances extending from the workpiece. If necessary, the device 162 could be made substantially longer than as shown to avoid protuberances.

The invention and its attendant advantages will be understood from the foregoing description and it will be apparent that various changes may be made in the form, construction, and the arrangements of the parts without departing from the scope of the invention as the same will now be understood by those skilled in the art and as defined in the appended claims.

## Claims

1. Apparatus for prestressing a countersink fastener hole, comprising a mandrel (32) for inserting into the hole, to be drawn therethrough, said mandrel (32) having a reduced diameter leading portion (62), an increasing diameter (64) and a maximum diameter portion (66) respectively axially outwardly of said reduced diameter portion (62), a prestressing member (74, 76) having conical-shaped portions (94) having substantially the same angle as said countersink, and having a central passageway (80) for receiving said mandrel (32), a sleeve (126) insertable into the hole while positioned under reduced diameter portion (62) of the mandrel (32), to serve as a forced transmitting spacer during the prestressing operation, a retaining member (102) having means (122) extending adjacent and around said mandrel (32) to support the inner end of said sleeve (126) against inwardly axial movement, when said mandrel (32) is being retracted during the prestressing operation, characterized in that said sleeve (126) is a split sleeve extending into the central passageway (80) of said prestressing member (74, 76), said prestressing member (74, 76) is an axially split ring member (74) comprising segments (76) and said increasing (64) and maximum diameter (66) portions of the mandrel (32) enlarge said passageway (80) in said ring member (74) to force said segments (76) apart outwardly whereby said countersink portion is stretched and prestressed.

2. Apparatus according to claim 1 in which said maximum diameter portion (66) of the mandrel (32) has an axial length about equal to its diameter.

3. Apparatus according to claim 1 in which said expandable ring member (74) is fitted in one end of a puller (30) for said mandrels (32), said axially split annular portions extending outwardly from said one end.

4. Apparatus according to claim 1, wherein said retaining member (102) is a second expandable member (102) in said puller inwardly of said ring member (74) and fitted around said mandrel (32); said second member (102) having inner surfaces (110) thereof in abutment with a puller surface and said ring member (74) being in fixed axial abutment with said second member (102) when said annular jaw (90) is prestressing said countersunk portion.

5. Apparatus according to claim 4 in which: said second member is an axially split disk (102) having a passageway (110) through which said mandrel extends; said passageway through said second member (102) being generally conical (110) and having its smallest diameter toward said inner end of said sleeve; said means (104) on said second member (102) extending generally radially from said smallest diameter along a surface of said second member in abutment with said ring member (74); said second member radial surface providing a shoulder (122) to support said inner end of said sleeve (126).

6. Apparatus according to claim 1 including: means (38, 88) for supporting the split member axially as it is being expanded and to support said sleeve axially.

7. Apparatus according to claim 1 in which: said maximum diameter portion (66) and said annular portions are sized so that the radial distance of prestressing the countersink is the same as that of the remainder of the fastener hole.

8. Apparatus according to claim 5 in which: said passageway (80) has a portion normally smaller in cross section than the maximum diameter of the mandrel (32) and a substantial part of the increasing diameter portion of the mandrel (32), so that as the mandrel (32) moves through such passageway portion (80) it expands the passageway (80) by forcing portions of the prestressing member spaced (76) between the splits apart and causes the outer end of said member to engage the countersink to prestress it as the increasing diameter and maximum diameter portions of the mandrel are retracted through the sleeve and countersink.

9. Apparatus according to claim 3—8 in which: said prestressing member outwardly of said puller (30) has a relatively small outer diameter compared with its inner end and with that of said gun; said outer end extending outwardly of said puller (30) a distance substantially greater than the length of movement of the maximum diameter (66) of the mandrel (32) through the fastener hole.

10. Apparatus according to claim 1 in which: said sleeve retainer (214) has a plurality of annularly spaced, axially directed slots (224) extending inwardly from the outern end (216) and terminating inwardly adjacent the outer end of the puller; axially directed spring fingers (230) extending between adjacent slots (224); said retainer (214) being slidable axially within said passageway relative to said prestressing member; means (236) on an inner ption of said mandrel (232) for engaging the inner end (216) of said retainer (214) and moving it outwardly relative to said passageway; and means on internal surfaces of said prestressing member within said passageway for being engaged by the outer end of the retainer (214), when the retainer (214) is moved outwardly, to expand the outer end of the prestressing member radially so that a sleeve on the mandrel (232) can be positioned in retaining contact with the outer end of the retainer (214).

11. Apparatus according to claim 10, including: spring means (208) between portions of said retainer (214) and said prestressing member for moving said retainer (214) inwardly out of said engagement with the prestressing means when the mandrel (232) is retracted and the means on the inner portion thereof are disengaged from the inner end of the retainer (214).

12. Apparatus according to claim 10 in which: said splits (192) in said prestressing member (162) extending inwardly from the outer end and adapted to terminate outwardly of the puller; said last splits being annularly spaced by axially directed resilient elongated portions (188); said means on said internal surfaces (202) of said prestressing member being annularly arranged cam followers (204) on each of said resilient elongated portions (188); each of said resilient elongated portions (188) forming internal surfaces of said passageway; said passageway having a large diameter portion axially inwardly of said cam followers, said retainer (214) extending in said last portion; a small diameter portion of said passageway extending outwardly of said cam followers (204); and outer portions of the resilient elongated portions (188) forming said small diameter portion and being adapted to tightly engage the sleeve (240) during the prestressing operation.

13. Apparatus according to claim 12 in which: said prestressing member (162) is generally tubular outwardly of said puller; the outer external end of the prestressing member (162), formed of the elongated resilient portions (188), has a conical shape having an angle (190) complementary to the angle of the countersink.

14. Apparatus according to claim 13 in which: the respective axial surfaces of said splits (192A) between said elongated resilient portions (188) are in substantial contact adjacent said outer external end so as to form narrow splits.

15. Apparatus according to claim 12 in which: said fingers (230) of said retainer (214) have cam surfaces (228) on their outer ends for engaging said cam followers (204) on said prestressing member (162) to expand the outer end of the prestressing member.

16. Apparatus according to claim 11 in which: said spring means (208) is an O-ring.

17. Apparatus according to claim 14 in which: said prestressing member (162) outwardly of said puller (30) has a relatively small outer diameter compared with its inner end and that of said puller (30); said outer end extending outwardly of said puller (30) a distance substantially greater than the length of movement of the maximum diameter of the mandrel (232) through the fastener hole.

18. A method of prestressing a countersunk fastener hole in a metal member, comprising: positioning a prelubricated cold-expansion sleeve (126, 240) on a reduced diameter intermediate portion of a cold-expansion mandrel (32, 232) said intermediate portion being axially inwardly of an increasing diameter portion, a maximum diameter portion of said mandrel (32, 232) extending outwardly of said increasing diameter portion; inserting the mandrel (32, 232) and sleeve (126, 240) into the hole from its countersunk side; and holding the sleeve (126, 240) axially in the hole while retracting the mandrel (32, 232) first through the sleeve (126, 240) and then through a prestressing member (74, 76, 162) projecting into the countersink, so that as the mandrel (32, 232) is retracted the increasing diameter and maximum portions of the mandrel (32, 232) expand the sleeve (126, 240) radially to prestress the metal surrounding said hole, and expand the annular portions radially to prestress the metal surrounding the countersink holding the sleeve (126, 240) in the hole with a tubular sleeve retainer (104, 214) normally extending around the reduced diameter of the mandrel (32, 232) outwardly of a puller and spaced axially from the hole, characterized by inserting an elongated axially plurally split generally tubular countersink prestressing member (74, 162) into the countersink, the prestressing member having a passageway and being radially outwardly of the sleeve (126, 240) and the retainer (104, 214) and retracting the mandrel (32, 232) through the sleeve (126, 240) through the retainer (104, 214) and through the countersink prestressing member (74, 162) said prestressing member (74, 162) having an outer end inserted in the countersink, the splits in the prestressing member (74, 162) extending inwardly from the outer end and terminating outwardly of the puller; said last splits being annularly spaced by axially directed resilient elongated portions (76, 188); the outer end of the prestressing member, being formed of the elongated resilient portions (76, 188), and having a conical shape having an angle complementary to the angle of the countersink.

19. Method according to claim 18, including the positioning of the sleeve on the mandrel: moving the mandrel (32, 232) and retainer (104, 214) outwardly of the puller relative to the prestressing member (74, 162); radially expanding the outer end of the prestressing member away from the mandrel by moving the retainer against surfaces thereof; inserting a sleeve (126, 240) between the outer end of the prestressing member and the mandrel; retracting the mandrel relative to the retainer; biasing the retainer axially inwardly to its sleeve retention position; and sliding the sleeve on the mandrel into retention contact with the outer end of the retainer.

**Patentansprüche**

1. Vorrichtung zum Vorspannen eines versenkten Befestigungsloches, mit einem Dorn (32) zum Einführen in das Loch, um durch dieses hindurchgezogen zu werden, wobei der Dorn (32) einen Vorderbereich (62) mit verringertem Durchmesser sowie einen Bereich (64) mit zunehmenden Durchmesser und einen Bereich (66) mit maximalem Durchmesser hat, jeweils in Axialrichtung außerhalb des verringerten Durchmesserbereichs (62), mit einem Vorspannteil (74, 76) mit konisch geformten Bereichen (94), die im wesentlichen den gleichen Winkel wie die Versenkung haben und einen zentralen Durchgang (80) zum Aufnehmen des Dornes (32) haben, mit einem Röhrchen (126), daß in das Loch einführbar ist, während es unterhalb des verringerten Durchmesserbereiches (62) des Dornes (32) angeordnet ist, um als ein kraftübertragender Abstandshalter während des Vorspannvorgangs zu dienen, mit einem Rückhalteteil (102), das Mittel (122) hat, die sich angrenzend an und um den Dorn (32) herum erstrecken, um das innere Ende des Röhrchens (126) gegen eine einwärts gerichtete Axialbewegung abzustützen, wenn der Dorn (32) während des Vorspannvorgangs zurückgezogen wird, dadurch gekennzeichnet, daß das Röhrchen (126) ein gespaltenes Röhrchen ist, daß sich in den zentralen Durchgang (80) des Vorspannteils (74, 76) hinein erstreckt, daß das Vorspannteil (74, 76) ein axialgespaltenes Ringteil (74) mit Segmenten (76) ist, und daß der zunehmende (64) und maximale Durchmesserbereich (66) des Dorns (32) den Durchgang (80) in dem Ringteil (74) vergrößert, um die Segmente (76) einzeln nach außen zu zwingen, wodurch der Versenkungsbereich geweitet und vorgespannt wird.

2. Vorrichtung gemäß Anspruch 1, in der der maximale Durchmesserbereich (66) des Dornes (32) eine Axiallänge etwa gleich seinem Durchmesser hat.

3. Vorrichtung gemäß Anspruch 1, in der das ausdehnbare Ringteil (74) in ein Ende eines Abziehers (30) für den Dorn (32) eingeführt ist, wobei sich die axial gespaltenen ringförmigen Bereiche von diesem einen Ende nach außen erstrecken.

4. Vorrichtung gemäß Anspruch 1, in der das Rückhalteteil (102) ein zweites ausdehnbares Ringteil (102) in dem Abzieher, innerseitlich des Ringteiles (74), ist und um den Dorn (32) herum angepaßt ist; in der das zweite Teil (102) Innenflächen (110) in Abstützung mit einer Abzieheroberfläche hat und das Ringteil (74) sich in starrer Axialabstützung mit dem zweiten Teil (102) befindet, wenn die ringförmige Klemmbacke (90) den Versenkungsbereich vorspannt.

5. Vorrichtung gemäß Anspruch 4, in der das zweite Teil eine axial gespaltene Scheibe (102) ist mit einem Durchgang (110), durch den sich der Dorn erstreckt; in der der Durchgang durch das zweite Teil (102) allgemein konisch (110) ist und seinen kleinsten Durchmesser zum inneren Ende des Röhrchens hin hat; in der die Mittel (104) auf dem zweiten Teil (102) sich allgemein radial vom kleinsten Durchmesser aus entlang einer Oberfläche des zweiten Teils in Abstützung mit dem Ringteil (74) erstrecken; in der die radiale Oberfläche des zweiten Teils eine Schulter (122) vorsieht, um das innere Ende des Röhrchens (126) zu tragen.

6. Vorrichtung gemäß Anspruch 1, mit Mitteln (38, 88), um das gespaltene Teil axial zu tragen, wenn es ausgedehnt wird, und um das Röhrchen axial zu tragen.

7. Vorrichtung gemäß Anspruch 1, in der der maximale Durchmesserbereich (66) und die ringförmigen Bereiche so bemessen sind, daß die radiale Weite der Versenkungsvorspannung die gleiche ist, wie die Restweite des Befestigungsloches.

8. Vorrichtung gemäß Anspruch 5, in der der Durchgang (80) einen Bereich hat, der normalerweise im Querschnitt kleiner als der Durchmesser des Dorns (32) ist, und ein wesentlicher Teil des zunehmenden Durchmessers des Dorns (32) ist, so daß, wenn der Dorn (32) sich durch einen solchen Durchgangsbereich (80) bewegt, er den Durchgang (80) ausdehnt, indem er die Bereiche des Vorspannteils (76), das zwischen den Spalten angeordnet ist, auseinanderzwingt und das äußere Ende des Teils veranlaßt, an die Versenkung anzugreifen, um sie vorzuspannen, wenn die Bereiche mit zunehmendem und maximalen Durchmesser des Dorns durch das Röhrchen und die Versenkung zurückgezogen werden.

9. Vorrichtung gemäß Anspruch 3 bis 8, in der das Vorspanteil außerhalb des Abziehers (30) einen relativ kleinen Durchmesser hat verglichen mit seinem inneren Ende und mit dem der Kanone; in der das äußere Ende sich von den Abzieher (30) um eine Strecke nach außen erstreckt, die im wesentlichen größer als die Bewegungslänge des maximalen Durchmessers (66) des Dorns (32) durch das Befestigungsloch ist.

10. Vorrichtung gemäß Anspruch 1, in der der Röhrchenhalter (214) eine Vielzahl von ringförmig angeordneten, axial ausgerichteten Schlitzen (224) hat, die sich von dem äußeren Ende (216) nach innen erstrecken und innen, angrenzend an das äußere Ende des Abziehers, enden; mit axial ausgerichteten Preßfingern (230), die sich zwischen benachbarten Schlitzen (224) erstrecken; in der der Halter (214), in Bezug auf das Vorspannteil, innerhalb des Durchgangs axial verschiebbar ist; mit Mitteln (236) auf einem inneren Bereich des Dorns (232) zum Angreifen an das innere Ende (216) des Halters (214) und zum nach außen Bewegen desselben in Bezug zu dem Durchgang; und mit Mitteln auf Innenflächen des Vorspannmittels innerhalb des Durchgangs, um durch das äußere Ende des Halters (214) angegriffen zu werden, wenn der Halter (214) nach außen bewegt wird, um das äußere Ende des Vorspannteils radial auszudehnen, so daß ein Röhrchen auf dem Dorn (232) in Haltekontakt mit dem äußeren Ende des Halters (214) angeordnet werden kann.

11. Vorrichtung gemäß Anspruch 10, mit einem Federmittel (208) zwischen Bereichen des Halters (214) und mit dem Vorspannteil zum nach innen Bewegen des Halters (214) aus dem Eingriff mit dem Vorspannmittel heraus, wenn der Dorn (232) zurückgezogen wird und die Mittel auf dessen inneren Bereich von dem inneren Ende des Halters (214) gelöst werden.

12. Vorrichtung gemäß Anspruch 10, in der sich Spaltöffnungen (192) in den Vorspannteilen (162) von dem äußeren Ende nach innen erstrecken und außerhalb des Abziehers enden; diese zuletzt genannten Spaltöffnungen werden ringförmig durch axial ausgerichtete, elastische längsgestreckte Bereiche (188) beabstandet; in der die Mittel auf den Innenflächen (202) des Vorspannteils ringförmig angeordnete Nockenstößel (204) auf jedem der elastischen längsgestreckten Bereiche (188) sind; in der jedes der elastischen längsgestreckten Bereiche (188) Innenflächen des Durchgangs bildet; in der der Durchgang einen Bereich mit großem Durchmesser in Axialrichtung innerseitlich der Nockenstößel hat, wobei der Halter (214) sich in den letzteren Bereich erstreckt; in der ein Bereich des Durchgangs mit kleinem Durchmesser sich von dem Nockenstößel (204) nach außen erstreckt; und in der äußere Bereiche der elastischen längsgestreckten Bereiche (188) den Bereich mit kleinerem Durchmesser bilden uhd angepaßt sind, um an das Röhrchen (240) während des Vorspannvorgangs stramm anzugreifen.

13. Vorrichtung gemäß Anspruch 12, in der das Vorspannteil (162) allgemein röhrenförmig außerhalb des Abziehers ist; in der das äußere Außenende des Vorspannteils (162), daß aus den längsgestreckten elastischen Bereichen (188) gebildet ist, eine konische Form mit einem Winkel (190), komplementär zu dem Winkel der Versenkung, hat.

14. Vorrichtung gemäß Anspruch 13, in der die jeweiligen axialen Oberflächen der Spalten (192A) zwischen den längsgestreckten elastischen Bereichen (188) im wesentlichen in Berührung mit den benachbarten Außenenden sind, um so enge Spalten zu bilden.

15. Vorrichtung gemäß Anspruch 12, in der die Finger (230) des Halters (214) Nockenflächen (228) auf ihren äußeren Enden haben, zum Eingreifen mit den Nockenstößeln (204) auf dem Vorspannteil (162), um das äußere Ende des Vorspannteils zu weiten.

16. Vorrichtung gemäß Anspruch 11, in der das Federmittel (208) ein O-Ring ist.

17. Vorrichtung gemäß Anspruch 14, in der das Vorspannteil (162) außerhalb des Abziehers (30) einen relativ kleinen äußeren Durchmesser hat verglichen mit seinem inneren Ende und dem des Abziehers (30); in der das äußere Ende sich von dem Abzieher (30) um eihe Strecke nach außen erstreckt, die im wesentlichen größer als die Bewegungslänge des maximalen Durchmessers des Dorns (232) durch das Befestigungsloch ist.

18. Verfahren zum Vorspannen eines versenkten Befestigungsloches in einem Metallteil umfaßt: Anordnen eines vorgeschmierten, kalt gezogenen Röhrchens (126, 240) auf einem Mittelbereich mit verkleinertem Durchmesser eines kalt gezogenen Dorns (32, 232), wobei sich der Mittelbereich in Axialrichtung innerseits eines Bereiches mit zunehmenden Durchmesser befindet und sich ein Bereich mit maximalem Durchmesser des Dorns (32, 232) von dem zunehmenden Durchmesserbereich nach außen erstreckt; das Einführen des Dorns (32, 232) und des Röhrchens (126, 240) in das Loch von seiner Versenkungsseite aus; das Halten des Röhrchens (126, 240) in Axialrichtung in das Loch, während der Dorn (32, 232) zurückgezogen wird, zuerst durch das Röhrchen (126, 240) und dann durch ein Vorspannteil (74, 76, 162), das in die Versenkung hineinragt, so daß, wenn der Dorn (32, 232) zurückgezogen wird, die Bereiche des Dorns (32, 232) mit dem zunehmenden und dem maximalen Durchmesser das Röhrchen (126, 240) radial ausdehnen, um das das Loch umgebende Metall vorzuspannen, und die ringförmigen Bereiche radial ausdehnen, um das Metall, das die das Röhrchen (126, 240) haltende Versenkung umgibt, in dem Loch mit einem röhrenförmigen Röhrchenhalter (104, 214) vorzuspannen, der sich normalerweise um den verkleinerten Durchmesser des Dorns (32, 232), außerhalb eines Abziehers, erstreckt und in Axialrichtung von dem Loch beabstandet ist, gekennzeichnet durch Einführen eines längsgestreckten, axialen, mehrfach gespaltenen, im allgemeinen röhrenförmigen, versenkten Vorspannteils (74, 162) in die Versenkung, wobei das Vorspannteil einen Durchgang hat und radial von dem Röhrchen (126, 240) und dem Halter (104, 214) aus nach außen gerichtet ist und den Dorn (32, 232) durch das Röhrchen (126, 214), durch den Halter (104, 214) und durch das Versenkungsvorspannteil (74, 162) zurückzieht, wobei das Vorspannteil (74, 162) ein äußeres, in die Versenkung eingeführtes Ende hat, und die Spalten in dem Vorspannteil (74, 162) sich von dem äußeren Ende ein warts erstrecken und außerhalb des Abziehers enden; die letztgenannten Spalten werden durch axial ausgerichtete, längsgestreckte Bereiche (76, 188), ringförmig beabstandet; das äußere Ende des Vorspannteils wird aus den längsgestreckten elastischen Bereichen (76, 188) gebildet und hat eine konische Gestalt mit einem dem Winkel der Versenkung komplementären Winkel.

19. Verfahren gemäß Anspruch 19 umfaßt das Anordnen des Röhrchens auf dem Dorn: das Bewegen des Dornes (32, 232) und des Halters (104, 214) aus dem Abzieher heraus, relativ zu dem Vorspannteil (74, 162); das radiale Ausdehnen des äußeren Endes des Vorspannteils weg von dem Dorn durch Bewegen des Halters gegen dessen Oberfläche; das Einführen eines Röhrchens (126, 240) zwischen das äußere Ende des Vorspannteils und dem Dorn; das Zurückziehen des Dorns relativ zu dem Halter; das Spannen des Halters axial nach innen in seine Röhrchen Haltestellung; und das Verschieben des Röhrchens auf dem Dorn in einen Haltekontakt mit dem äußeren Ende des Halters.

**Revendications**

1. Appareil de précontrainte d'un trou pour élément de fixation fraisé, comprenant un mandrin (32) à insérer dans le trou pour le tirer à travers celui-ci, ledit mandrin (32) présentant un tronçon menant de diamètre réduit (62), un tronçon de diamètre croissant (64) et un tronçon de diamètre maximum (66) tous deux situés axialement à l'extérieur dudit tronçon de diamètre réduit (62), un élément de précontrainte (74, 76) présentant des tronçons de forme conique (94) ayant sensiblement la même inclinaison que ladite fraisure, et présentant un passage central (80) de réception dudit mandrin (32), un manchon (126) pouvant s'insérer dans le trou en se plaçant sous le tronçon de diamètre réduit (62) du mandrin (32), pour servir d'entretoise de transmission de force pendant l'opération de précontrainte, un élément de retenue (102) comportant un moyen (122) s'étendant auprès et autour dudit mandrin (32) pour empêcher l'extrémité intérieure dudit manchon (126) de se déplacer axialement vers l'intérieur lorsque ledit mandrin (32) est en cours de rétraction pendant l'opération de précontrainte, caractérisé en ce que ledit manchon (126) est un manchon fendu pénétrant dans le passage central (80) dudit élément de précontrainte (74, 76), en ce que ledit élément de précontrainte (74, 76) est un élément annulaire divisé axialement (74) comprenant des secteurs (76) et en ce que lesdits tronçons de diamètre croissant (64) et de diamètre maximum (66) du mandrin (32) élargissent ledit passage (80) dudit élément annulaire (74) pour écarter à force lesdits secteurs (76) les uns des autres vers l'extérieur, de sorte que ledit tronçon de fraisure se trouve élargi et précontraint.

2. Appareil selon la revendication 1, caractérisé en ce que ledit tronçon de diamètre maximum (66) du mandrin (32) a une longueur axiale environ égale à son diamètre.

3. Appareil selon la revendication 1, caractérisé en ce que ledit élément annulaire expansible (74) est inséré dans une extrémité d'un organe (30) de traction dudit mandrin (32), lesdits tronçons annulaires divisés axialement s'étendant à l'extérieur à partir de ladite première extrémité.

4. Appareil selon la revendication 1, caractérisé en ce que ledit élément de retenue est un second élément expansible (102) situé dans ledit organe de traction intérieurement audit élément annulaire (74) et enfilé autour dudit mandrin (32), en ce que ledit second élément (102) bute par ses surfaces intérieures (110) contre une surface de l'organe de traction et en ce que ledit élément annulaire (74) est en aboutement axial fixe contre ledit second élément (102) quand ladite mâchoire annulaire (90) assure la précontrainte dudit tronçon fraisé.

5. Appareil selon la revendication 4, caractérisé en ce que ledit second élément est un disque divisé axialement (102) présentant un passage (110) à travers lequel s'étend ledit mandrin, en ce que ledit passage traversant ledit second élément est de forme générale conique (110), son plus faible diamètre étant proche de ladite extrémité intérieure dudit manchon, en ce que ledit moyen (104) du second élément (102) s'étend suivant une direction générale radiale à partir dudit plus faible diamètre le long d'une surface dudit second élément qui bute contre ledit élément annulaire (74) et en ce que la surface radiale dudit second élément définit un épaulement (122) de support de ladite extrémité intérieure dudit manchon (126).

6. Appareil selon la revendication 1, caractérisé en ce qu'il comporte des moyens (38, 88) propres à supporter axialement l'élément divisé pendant son mandrinage et à supporter axialement ledit manchon.

7. Appareil selon la revendication 1, caractérisé en ce que ledit tronçon de diamètre maximum (66) et lesdits tronçons annulaires sont dimensionnés de manière que la distance radiale de précontrainte de la fraisure soit égale à celle de précontrainte du reste du trou pour élément de fixation.

8. Appareil selon la revendication 5, caractérisé en ce que ledit passage (80) présente un tronçon à section normalement plus faible que le diamètre maximum du mandrin (32) et un partie notable du tronçon de diamètre croissant du mandrin (32) de sorte qu'en se déplaçant à travers ce tronçon de passage (80), le mandrin (32) mandrine ledit passage en écartant les uns des autres des tronçons (76) de l'élément de précontrainte répartis entre les divisions et amène l'extrémité extérieure dudit élément à porter contre la fraisure pour la précontraindre, pendant que les tronçons de diamètre croissant et de diamètre maximum du mandrin sont rétractés à travers le manchon et la fraisure.

9. Appareil selon l'une des revendications 3 à 8, caractérisé en ce que ledit élément de précontrainte présente extérieurement audit organe de traction (30) un diamètre extérieur relativement petit par rapport à son extrémité intérieure et à celle dudit pistolet, ladite extrémité extérieure s'étendant vers l'extérieur dudit organe de traction (30) sur une distance sensiblement supérieure à la longueur sur laquelle le tronçon de diamètre maximum (66) du mandrin (32) se déplace à travers le trou de fixation.

10. Appareil selon la revendication 1, caractérisé en ce que ledit élément de retenue de manchon (214) présente une série de fentes (224) dirigées axialement, réparties annulairement, s'étendant vers l'intérieur à partir de l'extrémité extérieure (216) et se terminant vers l'intérieur près de l'extrémité extérieure de l'organe de traction, en ce que des doigts élastiques dirigés axialement (230) s'étendent entre les fentes (224) voisines, en ce que ledit élément de retenue (214) peut coulisser axialement dans ledit passage par rapport audit élément de précontrainte, en ce que des moyens (236) sont prévus sur un tronçon intérieur dudit mandrin (232) pour rencontrer l'extrémité intérieure (216) dudit élément de retenue (214) et la déplacer vers l'extérieur par rapport audit passage, et en ce que des moyens sont prévus sur les surfaces intérieures dudit élément de précontrainte à l'intérieur dudit passage pour être rencontrés par l'extrémité extérieure de l'élément de retenue (214), quand celui-ci se déplace vers l'extérieur, afin d'élargir radialement l'extrémité extérieure de l'élément de précontrainte, de façon qu'un manchon présent sur le mandrin (232) puisse être mis en contact de retenue avec l'extrémité extérieure de l'élément de retenue (214).

11. Appareil selon la revendication 10, caractérisé en ce qu'il comporte un moyen élastique (208) prévu entre des tronçons dudit élément de retenue (214) et dudit élément de précontrainte pour écarter par déplacement vers l'intérieur ledit élément de retenue (214) du moyen de précontrainte quand le mandrin (232) se rétracte et que les moyens prévus sur son tronçon intérieur se dégagent de l'extrémité intérieure de l'élément de retenue (214).

12. Appareil selon la revendication 10, caractérisé en ce que lesdites incisions (192) dudit élément de précontrainte (162) s'étendent vers l'intérieur à partir de l'extrémité extérieure et viennent déboucher à l'extérieur de l'organe de traction, en ce que ces dernières incisions sont espacées annulairement par des tronçons oblongs élastiques (188) dirigés axialement, en ce que lesdits moyens prévus sur lesdites surfaces intérieures (202) dudit élément de précontrainte sont des palpeurs de came (204) disposés annulairement et prévus sur chacun desdits tronçons oblongs élastiques (188), en ce que lesdits tronçons oblongs élastiques (188) définissent une surface interne dudit passage, en ce que ledit passage présente un tronçon de grand diamètre situé axialement, intérieurement auxdits palpeurs de came, ledit élément de retenue (214) s'étendant au moins dans ledit dernier tronçon, en ce qu'un tronçon de petit diamètre dudit passage s'étend extérieurement auxdits palpeurs de came (204), en ce que des parties extérieures des tronçons oblongs élastiques (188) constituent ledit tronçon de faible diamètre et sont propres à porter étroitement contre le manchon (240) pendant l'opération de précontrainte.

13. Appareil selon la revendication 12, caractérisé, en ce que ledit élément de précontrainte (162) est de forme générale tubulaire vers l'extérieur dudit organe de traction, l'extrémité extérieure située extérieurement par rapport à l'élément de précontrainte (162), formée des tronçons élastiques oblongs (188), ayant une forme conique à inclinaison (190) complémentaire à celle de la fraisure.

14. Appareil selon la revendication 13, caractérisé en ce que les surfaces axiales respectives desdites incisions (192A) situées entre lesdits tronçons élastiques oblongs (188) sont sensiblement en contact au niveau de ladite extrémité extérieure située extérieurement, de façon à définir d'étroites incisions.

15. Appareil selon la revendication 12, caractérisé en ce que lesdits doigts (230) dudit élément de retenue (214) présentent sur leurs extrémités extérieures des surfaces-cames (228) destinées à coopérer avec lesdits palpeurs de came (204) dudit élément de précontrainte (162) pour élargir l'extrémité extérieure de l'élément de précontrainte.

16. Appareil selon la revendication 11, caractérisé en ce que ledit moyen élastique (208) est un joint torique.

17. Appareil selon la revendication 14, caractérisé en ce que ledit élément de précontrainte (162) est, extérieurement audit organe de traction (30), de diamètre extérieur relativement faible par rapport à son extrémité intérieure et à celle dudit organe de traction (30), ladite extrémité extérieure s'étendant vers l'extérieur dudit organe de traction (30) sur une longueur sensiblement supérieure à celle de déplacement du tronçon de diamètre maximum du mandrin (232) à travers le trou pour élément de fixation.

18. Procédé de précontrainte d'un trou pour élément de fixation fraisé, percé dans une pièce métallique, comprenant: la mise en place d'un manchon de mandrinage à froid prélubrifié (126, 240) sur un tronçon intermédiaire de diamètre réduit d'un mandrin de mandrinage à froid (32, 232), ledit tronçon intermédiaire étant situé, axialement, intérieurement par rapport à un tronçon de diamètre croissant, un tronçon de diamètre maximum dudit mandrin (32, 232) s'étendant extérieurement audit tronçon de diamètre croissant; l'insertion du mandrin (32, 232) et du manchon (126, 240) dans le trou, à partir du côté fraisé de celuici, et le maintien du mandrin (126, 240) axialement dans le trou pendant qu'on rétracte le mandrin (32, 232) d'abord à travers le manchon (126, 240), puis à travers un élément de précontrainte (74, 76, 162) faisant saillie à l'intérieur de la fraisure, de sorte que pendant la rétraction du mandrin (32, 232) les tronçons de diamètre croissant et de diamètre maximum du mandrin élargissent radialement le manchon (126, 240) pour précontraindre le métal entourant ledit trou et élargissent radialement les tronçons annulaires pour précontraindre le métal entourant la fraisure en maintenant le manchon (126, 240) dans le trou au moyen d'un élément de retenue de manchon tubulaire (104, 214) entourant normalement le tronçon de diamètre réduit du mandrin (32, 232) situé extérieurement à un organe de traction et axialement espacé du trou, caractérisé en ce qu'il comprend: l'insertion d'un élément de précontrainte de fraisure de forme générale tubulaire divisé en plusieurs pièces (74, 162) dans la fraisure, l'élément de précontrainte présentant un passage et étant situé radialement à l'extérieur du manchon (126, 240) et de l'élément de retenue (104, 214) et la rétraction du mandrin (32, 232) à travers le manchon (126, 240) à travers l'élément de retenue (104, 214) et à travers l'élément de précontrainte de fraisure (74, 162), ledit élément de précontrainte (74, 162) présentant une extrémité extérieure insérée dans la fraisure, les incisions de l'élément de précontrainte (74, 162) s'étendant vers l'intérieur à partir de l'extrémité extérieure et se terminant extérieurement à l'organe de traction, ces dernières incisions étant espacées annulairement par des tronçons oblongs élastiques dirigés axialement (76, 188), l'extrémité extérieure de l'élément de précontrainte étant constituée par les tronçons élastiques oblongs (76, 188) et étant de forme conique à inclinaison complémentaire à celle de la fraisure.

19. Procédé selon la revendication 18, caractérisé en ce qu'il comporte: la mise en place du manchon sur le mandrin; le déplacement du mandrin (32, 232) et de l'élément de retenue (104, 214) vers l'extérieur de l'organe de traction par rapport à l'élément de précontrainte (74, 162); l'élargissement radial de l'extrémité extérieure de l'élément de précontrainte écartant celle-ci du mandrin en amenant l'élément de retenue contre les surfaces de ces éléments; l'insertion d'un manchon (126, 240) entre l'extrémité extérieure de l'élément de précontrainte et le mandrin; la rétraction du mandrin par rapport à l'élément de retenue; une sollicitation appliquée à l'élément de retenue axialement vers l'intérieur vers sa position de maintien du manchon; et l'amenée du manchon, par coulissement sur le mandrin, en contact de maintien avec l'extrémité extérieure de l'élément de retenue.

EP  0 086 344  B1

Fig.1
PRIOR ART

Fig.2

Fig.3

Fig.9

Fig.10

1

Fig. 4

Fig. 5

Fig. 6

Fig.7

Fig.8

Fig.11

*Fig. 12*

*Fig. 13*

EP  0 086 344  B1

Fig.14

Fig.15

Fig.16

Fig.18

Fig.17

7

Fig.19

Fig. 20

Fig. 21

Fig. 22

Fig. 23

Fig. 24